# EUROPEAN PATENT APPLICATION

(11) **EP 1 956 236 A1**
(43) Date of publication of application: **13.08.2008**
(21) Application number: 08075045.8
(22) Date of filing: 17.01.2008
(51) Int. Cl.: F03D 7/02

(54) **Pitch control in a wind turbine**

(30) Priority: 06.02.2007 BE 200700048
(71) Applicant: HANSEN TRANSMISSIONS INTERNATIONAL NV, 2650 Edegem (BE)
(72) Inventor: de Wilde, Marcel Jules Marie, 3020 Veltem-Beisem (BE)
(74) Representative: Donné, Eddy

(57) **Abstract**

Wind turbine that is provided with a rotor (6) with propeller blades (7) with adjustable angles of incidence provided on the rotor (6) in such a manner that they can rotate round their longitudinal axes, and which are provided with a drive (9) and a primary control (10) to adjust the angles of incidence as a function of a measured parameter, characterized in that it is provided with a secondary control (11) which will make the angles of incidence vary in relation to the primary control (10) according to a predetermined setting.

## Description

The present invention concerns a wind turbine.

As is known, wind turbines are built up round an electric generator which is placed in a housing on top of a pylon and which is driven by a rotor with propeller blades via a transmission in said housing, which rotor is driven by the wind.

In particular, the invention concerns a wind turbine of the type which is provided with a rotor with propeller blades with adjustable angles of incidence, provided on the rotor in such a manner that they can rotate round their longitudinal axes, and which are provided with a drive and a primary control for this drive as a function of a measured parameter for adjusting said angles of incidence.

The angles of incidence of the propeller blades are adjusted among others to control the output or the rotational speed of the turbine and possibly to provide for an active damping of the flexible structure of the wind turbine as a whole and its components.

The active damping makes it possible to restrict the bendings and the distortions, as well the loads of major components of the wind turbine.

The angles of incidence of the propeller blades can be either adjusted individually for every separate propeller blade or synchronized for all propeller blades.

The control reacts to signals of one or several sensors to measure one or several parameters such as the angular setting of the propeller blades, the output, the rotational speed of the rotor, the load of the blades or of the rotor, accelerations in the wind turbine, and the like.

The control is usually part of a servo control whose measured signals, either or not filtered and processed, are used as a feedback for comparison with a set desired value.

Wind turbines are usually built up of components with a non-linear load or building characteristic, such as the propeller blades, the connection between the rotor and the transmission, the housing, the connection between the housing and the pylon, transmission components and the like.

It is known that a construction with components with non-linear characteristics behaves differently from a construction with what are called linear components.

A non-linear construction may typically have more than one distortion mode or vibration mode, and the mode of equilibrium that is aimed at depends on the initial conditions when starting up.

The chaos theory also teaches us that such constructions may become unstable when there is a "strange attractor" for the construction, also known as "attractor at infinity".

The presence of such a strange attractor may lead to sudden changes in the behavior of the construction, which results in that the bendings and distortions of the components may suddenly acquire very high amplitudes.

In most real-life constructions, however, there will be enough interferences in the load to prevent such situations with strange attractors and what is called the "blue sky catastrophe" from actually occurring.

However, in the case of wind turbines, the risk that such phenomena occur is real, especially when the wind conditions are relatively stable, as is the case with wind turbines in the open sea.

Moreover, most wind turbines nowadays have a variable velocity of rotation, which increases the risk for the rotor to turn at a rotational speed close to a critical value, for example as far as the phenomenon of undesired resonance occurring is concerned.

In order to avoid this, systems are now being developed to actively damp the bendings and distortions by means of the active control of the angles of incidence of the propeller blades.

A difficulty in thereby mastering the control of the angles of incidence however, is situated at the sensor level and the translation of their signals, and in the fact that it is very difficult to predict on the basis of these signals whether an instable condition is either or not imminent.

The present invention aims to remedy the above-mentioned and other disadvantages and to provide a simple solution by providing a control for the angles of incidence of the propeller blades in order to reduce the risk of being confronted with situations caused by the presence of strange attractors, whereby the aimed control can be combined with the existing controls.

To this end, the invention concerns a wind turbine that is provided with a rotor with propeller blades with adjustable angles of incidence provided on the rotor in such a manner that they can rotate round their longitudinal axes and which, in order to adjust the angles of incidence, are provided with a drive and a primary control thereof as a function of a measured parameter, whereby the wind turbine is provided with a secondary control which makes the angles of incidence vary in relation to the primary control according to a predetermined algorithm.

In this manner, the above-mentioned catastrophic situations can be very easily avoided by forcing an interference in the load pattern of the wind turbine by making the angles of incidence of the propeller blades vary in a predetermined desired manner. Resonant rise of the construction or a part of the construction and the phenomenon whereby the construction or a part of the construction starts to move to a strange attractor can thus be avoided.
Also certain resonance phenomena can be prevented or damped in this way.

The predetermined setting of the secondary control preferably makes the angles of incidence vary in a continuous manner, for at least two periods of stable wind conditions.

It will usually be sufficient to make the angle of incidence vary over small angles - for example in the order of 1° - around the point of action in which the angle of the blade is each time situated.

The secondary control of the angle of incidence can be set according to a preset systematic or stochastic function, for example according to a periodic function, or according to a preset algorithm in which has been implemented a stochastic element, whereby one aims to make the frequency of the secondary control of the angle of incidence differ from preset critical values. The secondary control does not require any input from sensors.

The secondary control may be entirely independent from the primary control and will be for example superposed on the latter, such that both the primary and the secondary control can be obtained via one and the same drive.

In order to better explain the characteristics of the invention, the following preferred embodiment of a wind turbine according to the invention will be described as an example only, without being limitative in any way, with reference to the accompanying drawings, in which:
figure 1 schematically represents a wind turbine according to the invention;
figure 2 represents the part indicated by F2 in figure 1 to a larger scale.

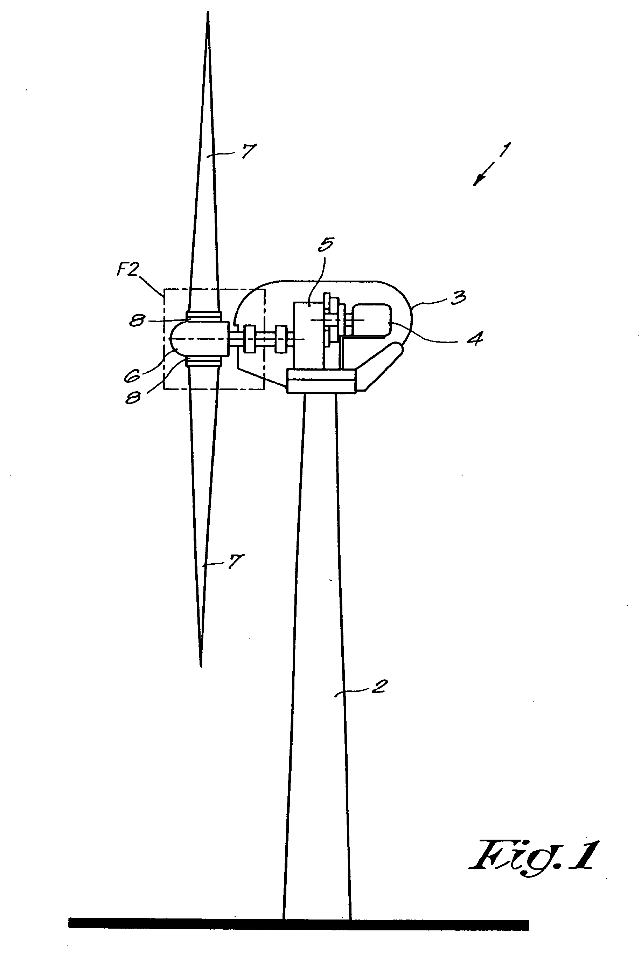

The wind turbine 1 represented in figure 1 mainly consists of a pylon 2 on which is provided a housing 3 or what is called a "nacelle" which can rotate round a vertical axis.

In the housing 3 is provided an electric generator 4 which is being driven via a transmission 5 in the housing 3 by a rotor 6 with propeller blades 7 which can be driven by the wind so as to generate green electric energy.

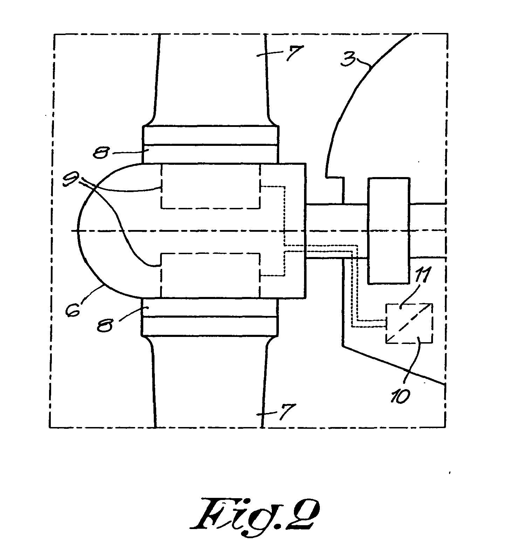

The propeller blades 7 are provided on the rotor 6 by means of bearings 8, such that they can rotate round their longitudinal axes, as is schematically represented in figure 2, provided with a drive 9 so as to be able to set or adjust the angles of incidence of the propeller blades 7, whereby every propeller blade 7 has its own drive 9 in the given example, but whereby this drive 9 could also be common.

The wind turbine 1 is further provided with a primary control 10 for the above-mentioned drive or drives 9 for adjusting the angles of incidence of the propeller blades 7, whereby this primary control 10 makes sure, in the known manner, that for example the rotational speed of the rotor 6 or the generated electric power are maintained constant.

This is usually done with a servo-mechanism, whereby the primary control 10 receives signals from certain sensors to this end to measure or calculate the rotational speed, the power or the like, whereby these sensors are not represented in the figures for simplicity's sake.

As soon as there is a specific wind or load interference or the like, the primary control will adjust the angles of incidence of the propeller blades so as to counteract the interference.

According to the invention, the wind turbine 1 is equipped with an additional secondary control 11 which makes sure that, on top of the angular settings of the primary control 10, the angles of incidence of the propeller blades 7 are preferably continuously adjusted with small angular variations, according to a preset systematic or stochastic function, for example a periodic function, or according to a preset algorithm in which has been implemented a stochastic element.

In this manner, on top of the usual settings of the angles of incidence for maintaining a constant rotational speed or power or the like, small angular variations are implemented which provide for wanted small interferences in the load pattern of the turbine or its components, which interferences are sufficient to avoid the undesired effects described in the introduction.

It is clear that the secondary control 11 can work entirely independently from any input whatsoever, from any sensor whatsoever that is used for the primary control 10, such that both controls 10 and 11 can function entirely independently from each other, and as a consequence, the secondary control can work entirely independently from possible external interferences, such as changes in the wind conditions, the electric power being consumed or the like.

Thus, the secondary control 11 also and especially stays active under stable wind conditions.

It is also clear that the secondary control 11 may possibly be dependent on certain situations occurring, whereby it is not excluded for example for the secondary control 11 to be merely active in periods in which the wind conditions are stable to a certain degree.

Although the primary control 10 and the secondary control 11 are represented as separate components in the figures, it is not excluded and even probable for both controls 10 and 11 to be incorporated in a single control.

The degree to which the angular setting of the propeller blades 7 must be controlled by the secondary control 11 can be determined in an experimental way as a function of each type of wind turbine 1 and possibly the prevailing wind conditions on the site of the wind turbine 1.

Although all the propeller blades 7 are preferably provided with a secondary control 11 for the angles of incidence, it is not excluded that only a limited number of these propeller blades 7 are provided with such a control.

It is also possible to provide a secondary control 11 that is common to all the propeller blades 7, or the opposite, to provide every propeller blade. 7 with its own secondary control 11.

The present invention is by no means restricted to the embodiment described as an example and represented in the accompanying drawings; on the contrary, such a wind turbine according to the invention can be made in all sorts of shapes and dimensions while still remaining within the scope of the invention.

## Claims

1. Wind turbine that is provided with a rotor (6) with propeller blades (7) with adjustable angles of incidence provided on the rotor (6) in such a manner that they can rotate round their longitudinal axes, and which are provided with a drive (9) and a primary control (10) to adjust the angles of incidence as a function of a measured parameter, **characterized in that** it is provided with a secondary control (11) which will make the angles of incidence vary in relation to the primary control (10) according to a predetermined setting or a predetermined algorithm.

2. Wind turbine according to claim 1, **characterized in that** the predetermined setting of the secondary control (11) makes the angles of incidence vary continuously.

3. Wind turbine according to claim 1 or 2, **characterized in that** the predetermined setting of the secondary control (11) makes the angles of incidence vary over small angles.

4. Wind turbine according to any one of the preceding claims, **characterized in that** the secondary control of the angles of incidence is set according to a preset systematic function.

5. Wind turbine according to any one of the preceding claims, **characterized in that** the secondary control of the angles of incidence is set according to a preset periodic function.

6. Wind turbine according to any one of claims 1 to 3, **characterized in that** the secondary control of the angles of incidence is set according to a preset algorithm in which has been implemented a stochastically varying parameter.

7. Wind turbine according to any one of the preceding claims, **characterized in that** the secondary control (11) is independent from the primary control (10).

8. Wind turbine according to any one of the preceding claims, **characterized in that** the secondary control is superposed on the primary control.

9. Wind turbine according to any one of the preceding claims, **characterized in that** the secondary control is on average situated around the actual point of action, seen on a time basis.

10. Wind turbine according to any one of the preceding claims, **characterized in that** at least one propeller blade (7) is provided with a secondary control (11) for its angle of incidence.

11. Wind turbine according to any one of the preceding claims, **characterized in that** several propeller blades (7) are provided with a secondary control (11) for their angles of incidence.

12. Wind turbine according to claim 11, **characterized in that** several propeller blades (7) are provided with a common secondary control (11) for their angles of incidence.

13. Wind turbine according to any one of the preceding claims, **characterized in that** the frequency of the secondary control for the angle of incidence differs from preset critical values.

14. Wind turbine according to any one of the preceding claims, **characterized in that** the secondary control is at least activated under stable wind conditions.
